**Europäisches Patentamt**

**European Patent Office**

**Office européen des brevets**

(19)

(11) Veröffentlichungsnummer : **0 036 645**
**B2**

(12) **NEUE EUROPÄISCHE PATENTSCHRIFT**

(45) Veröffentlichungstag der neuen Patentschrift :
09.07.86

(51) Int. Cl.⁴ : **B 30 B 15/10**

(21) Anmeldenummer : **81102110.4**

(22) Anmeldetag : **20.03.81**

(54) **Kupplungs- und Bremsvorrichtung für Pressen, Stanzen u.dgl.**

(30) Priorität : **26.03.80 DE 3011589**

(43) Veröffentlichungstag der Anmeldung :
**30.09.81 Patentblatt 81/39**

(45) Bekanntmachung des Hinweises auf die Patenterteilung : **25.01.84 Patentblatt 84/04**

(45) Bekanntmachung des Hinweises auf die Entscheidung
über den Einspruch : **09.07.86 Patentblatt 86/28**

(84) Benannte Vertragsstaaten :
**BE CH DE FR GB IT LI**

(56) Entgegenhaltungen :
**DE-B- 1 625 835**
**DE-B- 2 531 191**
**DE-C-  903 657**
**FR-A- 1 553 611**
**US-A- 2 674 356**
**Fachzeitschrift "asr-digest für angewandte Antriebs-**
**technik", Heft 9, Sept. 1974**
**Schmiedetechnik im Zeitalter der Automation, Heft 9,**
**Sept. 1971, Seiten 113, 114**
**Prospekt Boltmaster, Mai 1972, Seiten 1 und 6**
**Prospekt Boltmaster, Modell GB 6-4, Oktober 1967**
**Prospekt Forgemaster, Januar 1969**
**Prospekt: Das Polymatic Kaltformsystem Okt. 1972**

(73) Patentinhaber : **L. SCHULER GmbH**
**Bahnhofstrasse 41 - 67 Postfach 1222**
**D-7320 Göppingen (DE)**

(72) Erfinder : **Weber, Heinz**
**Göppinger Strasse 40/1**
**D-7321 Wäschenbeuren (DE)**

**EP 0 036 645 B2**

Jouve, 18, rue St-Denis, 75001 Paris, France

## Beschreibung

Die Erfindung bezieht sich auf eine Kupplungs- und Bremsvorrichtung für Pressen, Stanzen u. dgl., mittels derer deren Antriebswelle wahlweise durch eine Reibungskupplung mit einem Schwungrad verbindbar und durch eine Reibungsbremse gegenüber dem Gestell der Presse, Stanze o. dgl. abbremsbar ist, wobei die Lagerung des Schwungrades an dem Gestell auf einem rohrförmigen Ansatz vorgesehen ist, durch den hindurch sich der Endabschnitt der Antriebswelle erstreckt, wobei die Reibungskupplung und die Reibungsbremse auf dem nach der von dem Gestell abgewandten Seite über die Lagerung des Schwungrades vorragenden Endabschnitt angeordnet sind, wobei die Reibungskupplung über einen die Reibungsbremse übergreifenden, an dem Schwungrad befestigten Ringträger an dem Schwungrad angreift, und wobei die Reibungsbremse über einen durch das Schwungrad hindurchgeführten, die Antriebswelle umschließenden Hohlträger abgestützt ist.

Eine solche Vorrichtung mit stabiler Lagerung des Schwungrades ist durch den Sonderdruck aus « asr-digest für angewandte Antriebstechnik » Heft 9, September 1974 bekannt.

Durch die US-A-2 674 356 ist eine Kupplungs- und Bremsvorrichtung für Pressen, Stanzen, u. dgl., mittels derer deren Antriebswelle wahlweise durch eine Reibungskupplung mit einem Schwungrad verbindbar und durch eine Reibungsbremse gegenüber dem Gestell der Presse, Stanze od. dgl. abbremsbar ist, wobei die Lagerung des Schwungrades an dem Gestell auf einem rohrförmigen Ansatz vorgesehen ist, durch den hindurch sich der Endabschnitt der Antriebswelle erstreckt, und wobei die Reibungskupplung und die Reibungsbremse auf dem nach der von dem Gestell abgewandten Seite über die Lagerung des Schwungrades vorragenden Endabschnitt angeordnet sind, bekannt.

Bei einer weiteren bekannten Kupplungs- und Bremsvorrichtung dieser Art (DE-B-1 625 835) sind die Reibungskupplung und die Reibungsbremse auf der dem Gestell zugewandten Seite des Schwungrades innerhalb des rohrförmigen Ansatzes an dem Gestell angeordnet, und zwar die Reibungsbremse gestellseitig und die Reibungskupplung schwungradseitig. Wesentliche Nachteile der obengenannten bekannten Kupplungs- und Bremsvorrichtung bestehen darin, dass die Reibungskupplung und die Reibungsbremse für Überprüfungs- und Wartungsarbeiten sehr schlecht zugänglich und wegen der beengten Raumverhältnisse nur in der Form teurer Sonderbauarten nicht aber in der Form preiswerterer, handelsüblicher Bauarten einsetzbar sind.

Es ist auch bereits eine Kupplungs- und Bremsvorrichtung für Pressen, Stanzen, u. dgl. bekannt (DE-C-903 657), mittels derer deren Antriebswelle wahlweise durch eine Reibungskupplung mit einem Schwungrad verbindbar und durch eine Reibungsbremse gegenüber dem Gestell abbremsbar ist, wobei die Lagerung des Schwungrades auf einem aus dem Gestell vorragenden Endabschnitt der Antriebswelle vorgesehen ist. Die Reibungskupplung und die Reibungsbremse sind hierbei auf der von dem Gestell abgewandten Seite des Schwungrades den Endabschnitt der Antriebswelle umschliessend angeordnet, und zwar die Reibungskupplung dem Schwungrad benachbart und die Reibungsbremse im Bereich des äusseren Endes des Endabschnittes. Dabei ist an dem Gestell eine unterhalb der Kupplungs- und Bremsvorrichtung einschliesslich des Schwungrades vorkragende Konsole angebracht, die dem Endabschnitt der Antriebswelle als zusätzliche Lagerung und zur Aufnahme des Abstützmomentes der Reibungsbremse dient.

Wesentliche Nachteile der nach der o. g. Fachzeitschrift bekannten Kupplungs- und Bremsvorrichtung bestehen darin, dass das Schwungrad und die Reibungsbremse im rohrförmigen Ansatz sowohl eine Biegebeanspruchung als auch eine Torsionsbeanspruchung hervorrufen, so daß dieser Ansatz sehr stark belastet ist.

Aufgabe der Erfindung ist es, unter Vermeidung der Nachteile der bekannten Kupplungs- und Bremsvorrichtungen eine solche Vorrichtung zu schaffen, bei der die Belastung des Ansatzes verringert wird, wobei außerdem die Kupplungs- und Bremsvorrichtung eine stabile Lagerung des Schwungrades aufweist, einen einfachen Wechsel dieses Schwungrad umschlingender Antriebsriemen ermöglicht und eine gute Zugänglichkeit der Reibungskupplung und der Reibungsbremse gewährleistet, die in handelsüblichen Ausführungen eingesetzt werden können.

Diese Aufgabe ist bei einer Kupplungs- und Bremsvorrichtung der eingangs genannten Art nach einem ersten Vorschlag dadurch gelöst, dass der für die Lagerung des Schwungrades vorgesehene rohrförmige Ansatz eine an dem Schwungrad auf dessen dem Gestell zugewandter Seite angebrachte Lagerhülse umschließt, und daß innerhalb dieser Lagerhülse der die Reibungsbremse abstützende, an dem Gestell befestigte Hohlträger angeordnet ist.

Eine weitere Lösung der gestellten Aufgabe besteht darin, daß innerhalb des für die Lagerung des Schwungrades vorgesehenen rohrförmigen Ansatzes eine die Antriebswelle umschließende Hohlwelle angeordnet ist, deren von dem Gestell abgewandtes Ende die Abstützung der Reibungsbremse trägt, und deren dem Gestell zugewandtes Ende ein Schneckenrad trägt, in das eine in dem rohrförmigen Ansatz gelagerte, antreib- und stillsetzbare Schnecke eingreift.

Andererseits kann die Aufgabe auch dadurch gelöst werden, daß der für die Lagerung des Schwungrades vorgesehene rohrförmige Ansatz eine an dem Schwungrad auf dessen dem Gestell zugewandter Seite angebrachte Lagerhülse unter Zwischenschaltung einer Hohlwelle umschließt, daß innerhalb dieser Lagerhülse eine die Antriebswelle umschließende weitere Hohlwelle angeordnet ist, deren von dem Gestell abgewandtes Ende die Abstützung der Reibungsbremse trägt, und daß die beiden Hohlwellen an ihren dem Gestell zugewandten Enden miteinander verbunden sind und dort ein Schneckenrad tragen, in das eine in dem rohrförmigen Ansatz gelagerte, antreib- und stillsetzbare Schnecke eingreift.

Bei diesen Ausführungsformen der Kupplungs- und Bremsvorrichtung lassen sich die Nachteile der Aufnahme der beiden Beanspruchungen durch ein Bauteil vermeiden.

Die beiden letztgenannten Ausführungsformen der Kupplungs- und Bremsvorrichtung erschliessen noch die Möglichkeit, über die Reibungsbremse wahlweise das Abbremsen der antriebswelle zu bewirken oder die Antriebswelle mit einem Langsamantrieb (Schleichgang) mit Schneckenradtrieb zu kuppeln.

Zum Betätigen der Kupplungs- und Bremsvorrichtung können getrennte Betätigungsorgane für die Reibungskupplung und die Reibungsbremse vorgesehen sein. Zweckmässigerweise ist jedoch ein einziges, in Achsrichtung der Antriebswelle verschiebliches Betätigungsorgan vorgesehen, das in der einen Betätigungsrichtung — vorzugsweise : Bremse schliessen Kupplung öffnen — unter der Wirkung einer Federkraft und in der entgegengesetzten Betätigungsrichtung — vorzugsweise : Bremse öffnen, Kupplung schliessen — mittels Druckmittel beaufschlagbar ist.

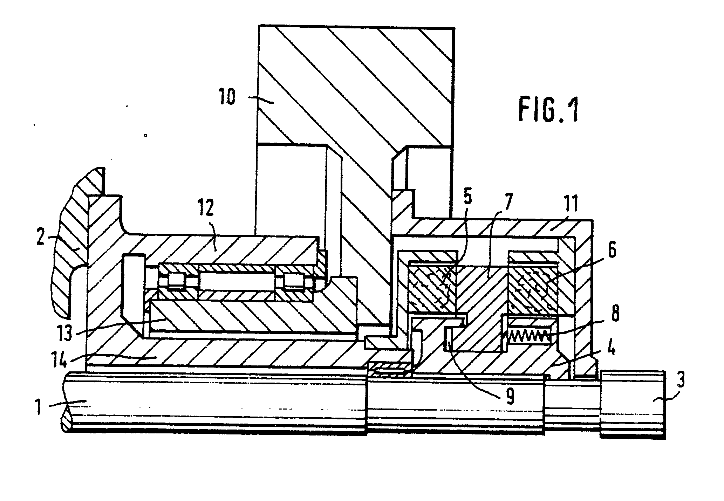

In der Zeichnung (Fig. 1 bis 3) sind drei Ausführungsbeispiele für die Kupplungs- und Bremsvorrichtung nach der Erfindung je in einem Teilschnitt in einer die Achse der Antriebswelle enthaltenden Ebene schematisch dargestellt.

Eine Antriebswelle 1 einer — im übrigen in der Zeichnung nicht dargestellten — Presse, aus deren Gestell 2 der Endabschnitt der Antriebswelle 1 herausragt, trägt an ihrem äusseren Ende einen gegenüber der Antriebswelle 1 drehbaren, räumlich stillstehenden Zuführkopf 3, über den Zu- und Ableitungen fürt Druckmittel zum Betätigen der Kupplungs- und Bremsvorrichtung geführt sind. Auf dem Endabschnitt der Antriebswelle 1 ist mit geringem Abstand von dem Zuführkopf 3 eine Nabe 4 befestigt, mit der die Antriebswelle 1 zugeordneten Reibscheiben der Reibungsbremse 5 und der Reibungskupplung 6 drehfest verbunden sind. Auf der Nabe 4 ist zwischen der Reibungsbremse 5 und der Reibungskupplung 6 ein gemeinsames Betätigungsorgan 7 für diese in Achsrichtung der Antriebswelle 1 verschiebbar gelagert. Das Betätigunsorgan 7 steht in Richtung auf das Gestell 2 unter der Wirkung von Druckfedern 8 und in entgegengesetzter Richtung unter der Wirkung eines über den Zuführkopf 3 einer Druckmittelkammer 9 zuführbaren Druckmittels, so dass wahlweise die Reibscheiben der Reibungskupplung 6 und die Reibscheiben der Reibungsbremse 5 mit den zugehörigen Gegenscheiben durch Reibschluss verbindbar sind. Die Gegenscheiben der Reibungskupplung 6 sind drehfest mit einem die Reibungsbremse 5 übergreifenden, an einem Schwungrad 10 befestigten Ringträger 11 verbunden.

Bei dem ersten Ausführungsbeispiel (Fig. 1) umschliesst der an dem Gestell 2 befestigte, rohrförmige Ansatz 12 eine an dem Schwungrad 10 auf dessen dem Gestell 2 zugewandter Seite angebrachte Lagerhülse 13, mittels derer das Schwungrad 10 an dem rohrförmigen Ansatz 12 gelagert ist. Innerhalb der Lagerhülse 13 ist ein die Antriebswelle 1 umschliessender, an dem Gestell 2 befestigter Hohlträger 14 angeordnet, mit dessen von dem Gestell 2 abgewandtem Ende die Gegenscheiben der Reibungsbremse 5 drehfest verbunden sind.

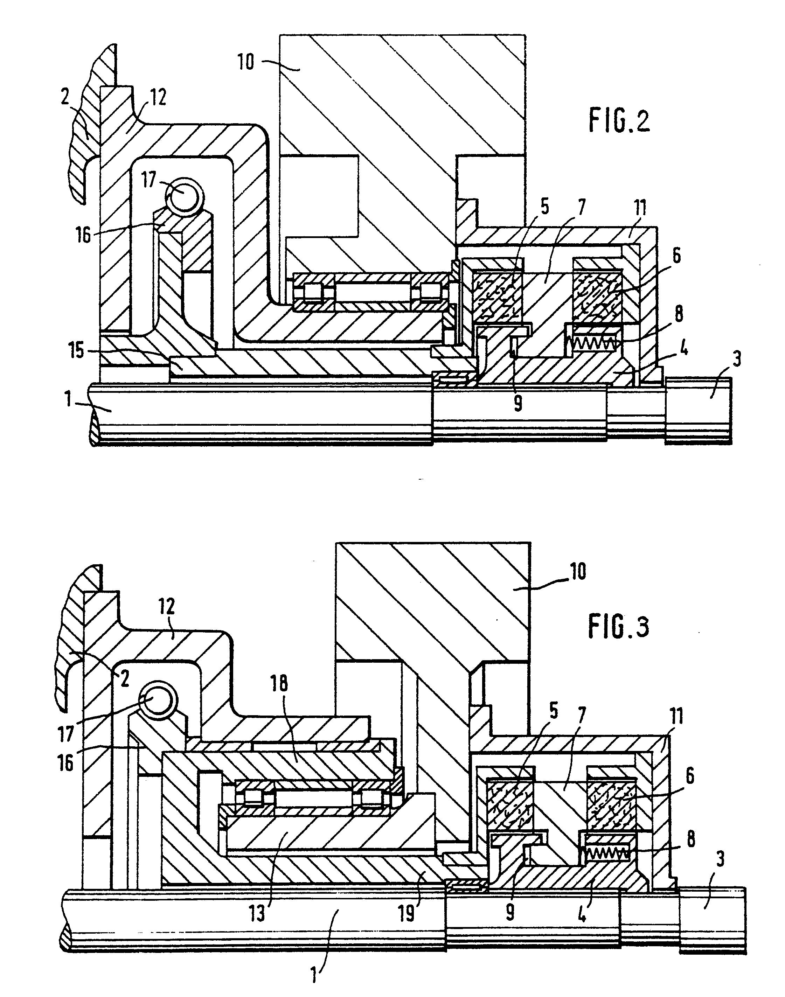

Bei dem zweiten Ausführungsbeispiel (Fig. 2) ist das Schwungrad 10 auf dem an dem Gestell 2 befestigten, rohrförmigen Ansatz 12 gelagert. Innerhalb des rohrförmigen Ansatzes 12 ist eine die Antriebswelle 1 umschliessende Hohlwelle 15 angeordnet, deren von dem Gestell 2 abgewandtes Ende drehfest mit den Gegenscheiben der Reibungsbremse 5 verbunden ist, während das dem Gestell 2 zugewandte Ende der Hohlwelle 15 ein Schneckenrad 16 trägt, in das eine in dem rohrförmigen Ansatz 12 gelagerte, antreib- und stillsetzbare Schnecke 17 eingreift.

Bei dem dritten Ausführungsbeispiel (Fig. 3) umschliesst der an dem Gestell 2 befestigte, rohrförmige Ansatz 12 eine an dem Schwungrad 10 auf dessen dem Gestell 2 zugewandter Seite angebrachte Lagerhülse 13 unter Zwischenschaltung einer Hohlwelle 18, womit das Schwungrad 10 an dem rohrförmigen Ansatz 12 gelagert ist. Innerhalb der Lagerhülse 13 ist eine die Antriebswelle 1 umschliessende weitere Hohlwelle 19 angeordnet, mit deren von dem Gestell 2 abgewandtem Ende die Gegenscheiben der Reibungsbremse 5 drehfest verbunden sind. Die dem Gestell 2 zugewandten Enden der Hohwellen 18, 19 sind miteinander verbunden und tragen dort ein Schneckenrad 16, in das eine in dem rohrförmigen Ansatz 12 gelagerte, antreib- und stillsetzbare Schnecke 17 eingreift.

**Patentansprüche**

1. Kupplungs- und Bremsvorrichtung für Pressen, Stanzen u. dgl., mittels derer deren Antriebswelle (1) wahlweise durch eine Reibungskupplung (6) mit einem Schwungrad (10) verbindbar und durch eine Reibungsbremse (5) gegenüber dem Gestell (2) der Presse, Stanze o. dgl. abbremsbar ist, wobei die Lagerung des Schwungrades (10) an dem Gestell (2) auf einem rohrförmigen Ansatz (12) vorgesehen ist, durch den hindurch sich der Endabschnitt der Antriebswelle (1) erstreckt, wobei die Reibungskupplung (6) und die Reibungsbremse (5) auf dem nach der von dem Gestell (2) abgewandten Seite über die Lagerung des Schwungrades (10) vorragenden Endabschnitt angeordnet sind, wobei die Reibungskupplung (6) über einen die Reibungsbremse (5) übergreifenden, an dem Schwungrad (10) befestigten Ringträger (11) an dem Schwungrad (10) angreift, und wobei die Reibungsbremse (5) über einen durch das Schwungrad (10) hindurchgeführten, die Antriebswelle (1) umschließenden Hohlträger (14, 15, 19) abgestützt ist, dadurch gekennzeichnet, daß der für die Lagerung des Schwungrades (10) vorgesehene rohrförmige Ansatz (12) eine an dem Schwungrad (10) auf dessen dem Gestell (2) zugewandter Seite angebrachte Lagerhülse (13) umschließt, und daß innerhalb dieser Lagerhülse (13) der die Reibungsbremse (5) abstützende, an dem Gestell (2) befestigte Hohlträger (14) angeordnet ist (Fig. 1).

2. Kupplungs- und Bremsvorrichtung für Pressen, Stanzen u. dgl., mittels derer deren Antriebswelle (1) wahlweise durch eine Reibungskupplung (6) mit einem Schwungrad (10) verbindbar und durch eine Reibungsbremse (5) gegenüber dem Gestell (2) der Presse, Stanze o. dgl. abbremsbar ist, wobei die Lagerung des Schwungrades (10) an dem Gestell (2) auf einem rohrförmigen Ansatz (12) vorgesehen ist, durch den hindurch sich der Endabschnitt der Antriebswelle (1) erstreckt, wobei die Reibungskupplung (6) und die Reibungsbremse (5) auf dem nach der von dem Gestell (2) abgewandten Seite über die Lagerung des Schwungrades (10) vorragenden Endabschnitt angeordnet sind, wobei die Reibungskupplung (6) über einen die Reibungsbremse (5) übergreifenden, an dem Schwungrad (10) befestigten Ringträger (11) an dem Schwungrad (10) angreift, und wobei die Reibungsbremse (5) über einen durch das Schwungrad (10) hindurchgeführten, die Antriebswelle (1) umschließenden Hohlträger (14, 15, 19) abgestützt ist, dadurch gekennzeichnet, daß innerhalb des für die Lagerung des Schwungrades (10) vorgesehenen rohrförmigen Ansatzes (12) eine die Antriebswelle (1) umschließende Hohlwelle (15) angeordnet ist, deren von dem Gestell (2) abgewandtes Ende die Abstützung der Reibungsbremse (5) trägt, und deren dem Gestell (2) zugewandtes Ende ein Schneckenrad (16) trägt, in das eine in dem rohrförmigen Ansatz (12) gelagerte, antreib- und stillsetzbare Schnecke (17) eingreift (Fig. 2).

3. Kupplungs- und Bremsvorrichtung für Pressen, Stanzen u. dgl., mittels derer deren Antriebswelle (1) wahlweise durch eine Reibungskupplung (6) mit einem Schwungrad (10) verbindbar und durch eine Reibungsbremse (5) gegenüber dem Gestell (2) der Presse, Stanze o. dgl. abbremsbar ist, wobei die Lagerung des Schwungrades (10) an dem Gestell (2) auf einem rohrförmigen Ansatz (12) vorgesehen ist, durch den hindurch sich der Endabschnitt der Antriebswelle (1) erstreckt, wobei die Reibungskupplung (6) und die Reibungsbremse (5) auf dem nach der von dem Gestell (2) abgewandten Seite über die Lagerung des Schwungrades (10) vorragenden Endabschnitt angeordnet sind, wobei die Reibungskupplung (6) über einen die Reibungsbremse (5) übergreifenden, an dem Schwungrad (10) befestigten Ringträger (11) an dem Schwungrad (10) angreift, und wobei die Reibungsbremse (5) über einen durch das Schwungrad (10) hindurchgeführten, die Antriebswelle (1) umschließenden Hohlträger (14, 15, 19) abgestützt ist, dadurch gekennzeichnet, daß der für die Lagerung des Schwungrades (10) vorgesehene rohrförmige Ansatz (12) eine an dem Schwungrad (10) auf dessen dem Gestell (2) zugewandter Seite angebrachte Lagerhülse (13) unter Zwischenschaltung einer Hohlwelle (18) umschließt, daß innerhalb dieser Lagerhülse (13) eine die Antriebswelle (1) umschließende weitere Hohlwelle (19) angeordnet ist, deren von dem Gestell (2) abgewandtes Ende die Abstützung der Reibungsbremse (5) trägt, und daß die beiden Hohlwellen (18, 19) an ihren dem Gestell (2) zugewandten Enden miteinander verbunden sind und dort ein Schneckenrad (16) tragen, in das eine in dem rohrförmigen Ansatz (12) gelagerte, antreib- und stillsetzbare Schnecke (17) eingreift (Fig. 3).

**Claims**

1. Clutch and brake device for presses, punching machines, and the like, which enables the drive shaft (1) of a press, or similar machine, to be connected, at will, to a fly-wheel (10), via a friction clutch (6), or to be braked, relative to the frame (2) of the press, punching machine, or the like, braking being effected by means of a friction brake (5), the mounting of the fly-wheel (10), on the frame (2), being provided on a tubular projection (12), through which the end portion of the drive shaft (1) extends, and the friction clutch (6) and the friction brake (5) being located on the end portion which projects beyond the mounting of the fly-wheel (10), towards the side facing away from the frame (2), and the friction clutch (6) acts on the fly-wheel (10) via an annular carrier (11) which extends over the friction brake (5) and is fastened to the fly-wheel (10), and the friction brake (5) is carried by means of a hollow support (14, 15, 19) which is guided through the fly-wheel (10) and surrounds the drive shaft (1), characterised in that the tubular projection (12), which is provided for mounting the fly-wheel (10), surrounds a bearing sleeve (13) which is attached to the fly-wheel (10), on its side facing the frame (2), and in that the hollow support (14) which carries the friction brake (5), and which is fastened to the frame (2), is located inside this bearing sleeve (13) (Fig. 1).

2. Clutch and brake device for presses, punching machines, and the like, which enables the drive shaft (1) of a press, or similar machine, to be connected, at will, to a fly-wheel (10), via a friction clutch (6), or to be braked, relative to the frame (2) of the press, punching machine, or the like, braking being effected by means of a friction brake (5), the mounting of the fly-wheel (10), on the frame (2), being provided on a tubular projection (12), through which the end portion of the drive shaft (1) extends, and the friction clutch (6) and the friction brake (5) being located on the end portion which projects beyond the mounting of the fly-wheel (10), towards the side facing away from the frame (2), and the friction clutch (6) acts on the fly-wheel (10) via an annular carrier (11) which extends over the friction brake (5) and is fastened to the fly-wheel (10), and the friction brake (5) is carried by means of a hollow support (14, 15, 19) which is guided through the fly-wheel (10) and surrounds the drive shaft (1), characterised in that a hollow shaft (15) is located inside the tubular projection (12) which is provided for mounting the fly-wheel (10), this hollow shaft (15) surrounding the drive shaft (1), while its end which faces away from the frame (2) supports the means for carrying the friction brake (5), and its end which faces the frame (2) carries a worm wheel (16), with which a worm (17) meshes, this worm (17) being mounted in the tubular projection (12) and being capable of being driven, and of being stopped (Fig. 2).

3. Clutch and brake device for presses, punching machines, and the like, which enables the drive shaft (1) of a press, or similar machine, to be connected, at will, to a fly-wheel (10), via a friction clutch (6), or to be braked, relative to the frame (2) of the press, punching machine, or the like, braking being effected by means of a friction brake (5), the mounting of the fly-wheel (10), on the frame (2), being provided on a tubular projection (12), through which the end portion of the drive shaft (1) extends, and the friction clutch (6) and the friction brake (5) being located on the end portion which projects beyond the mounting of the fly-wheel (10), towards the side facing away from the frame (2), and the friction clutch (6) acts on the fly-wheel (10) via an annular carrier (11) which extends over the friction brake (5) and is fastened to the fly-wheel (10), and the friction brake (5) is carried by means of a hollow support (14, 15, 19) which is guided through the fly-wheel (10) and surrounds the drive shaft (1), characterised in that the tubular projection (12), which is provided for mounting the fly-wheel (10), surrounds a bearing sleeve (13) which is attached to the fly-wheel (10), on its side facing the frame (2), a hollow shaft (18) being installed between the tubular projection (12) and the bearing sleeve (13), in that a further hollow shaft (19) is located inside this bearing sleeve (13), this further hollow shaft (19) surrounding the drive shaft (1), while its end which faces away from the frame (2) supports the means for carrying the friction brake (5), and in that the two hollow shafts (18, 19) are interconnected at their ends facing the frame (2), where they carry a worm wheel (16) with which a worm (17) meshes, this worm (17) being mounted in the tubular projection (12) and being capable of being driven, and of being stopped (Fig. 3).

**Revendications**

1. Dispositif embrayage-frein pour presses, poinçonneuses et équivalents, au moyen duquel l'arbre d'entraînement (1) de cette presse, poinçonneuse ou équivalent peut être sélectivement, soit accouplé à un volant d'inertie (10) par un embrayage à friction (6), soit freiné par rapport au bâti (2) de la presse, poinçonneuse ou équivalent par un frein à friction (5), le montage rotatif du volant d'inertie (10) sur le bâti (2) étant prévu sur un prolongement tubulaire (12) à travers lequel passe le segment terminal de l'arbre d'entraînement (1), et l'embrayage à friction (6) et le frein à friction (5) étant montés sur le segment terminal qui fait saillie au-delà du palier du volant d'inertie (10), sur le côté éloigné du bâti (2), et l'embrayage à friction (6) attaque le volant d'inertie (10) par l'intermédiaire d'un support annulaire (11) qui entoure le frein à friction (5) et est fixé au volant d'inertie (10) et le frein à friction (5) prend sa réaction par l'intermédiaire d'un support creux (14, 15, 19) qui passe à travers le volant d'inertie (10) et entoure l'arbre d'entraînement (1), caractérisé en ce que le prolongement tubulaire (12) prévu pour le montage rotatif du volant d'inertie (10) entoure un manchon de portée (13) monté sur le volant d'inertie (10) sur le côté de ce dernier qui est dirigé vers le bâti (2) et en ce que le support creux (14) fixé au bâti (2) et qui forme l'organe de réaction du frein à friction (5) est disposé à l'intérieur de ce manchon de portée (13) (Fig. 1).

2. Dispositif embrayage-frein pour presses, poinçonneuses et équivalents, au moyen duquel l'arbre d'entraînement (1) de cette presse, poinçonneuse ou équivalent peut être sélectivement, soit accouplé à un volant d'inertie (10) par un embrayage à friction (6), soit freiné par rapport au bâti (2) de la presse, poinçonneuse ou équivalent par un frein à friction (5), le montage rotatif du volant d'inertie (10) sur le bâti (2) étant prévu sur un prolongement tubulaire (12) à travers lequel passe le segment terminal de l'arbre d'entraînement (1), et l'embrayage à friction (6) et le frein à friction (5) étant montés sur le segment terminal qui fait saillie au-delà du palier du volant d'inertie (10), sur le côté éloigné du bâti (2), et l'embrayage à friction (6) attaque le volant d'inertie (10) par l'intermédiaire d'un support annulaire (11) qui entoure le frein à friction (5) et est fixé au volant d'inertie (10) et le frein à friction (5) prend sa réaction par l'intermédiaire d'un support creux (14, 15, 19) qui passe à travers le volant d'inertie (10) et entoure l'arbre d'entraînement (1), caractérisé en ce que, à l'intérieur du prolongement tubulaire (12) prévu pour le montage rotatif du volant d'inertie (10), est disposé un arbre creux (15) qui entoure l'arbre d'entraînement (1), dont l'extrémité éloignée du bâti (2) porte l'organe de réaction du frein à friction (5) et dont l'extrémité dirigée vers le bâti (2) porte une roue à vis sans fin (16) dans laquelle engrène une vis sans fin (17) montée rotative dans le prolongement tubulaire (12) et qui peut être entraînée ou immobilisée (Fig. 2).

3. Dispositif embrayage-frein pour presses, poinçonneuses et équivalents, au moyen duquel l'arbre d'entraînement (1) de cette presse, poinçonneuse ou équivalent peut être sélectivement, soit accouplé à un volant d'inertie (10) par un embrayage à friction (6), soit freiné par rapport au bâti (2) de la presse, poinçonneuse ou équivalent par un frein à friction (5), le montage rotatif du volant d'inertie (10) sur le bâti (2) étant prévu sur un prolongement tubulaire (12) à travers lequel passe le segment terminal de l'arbre d'entraînement (1), et l'embrayage à friction (6) et le frein à friction (5) étant montés sur le segment terminal qui fait saillie au-delà du palier du volant d'inertie (10), sur le côté éloigné du bâti (2), et l'embrayage à friction (6) attaque le volant d'inertie (10) par l'intermédiaire d'un support annulaire (11) qui entoure le frein à friction (5) et est fixé au volant d'inertie (10) et le frein à friction (5) prend sa réaction par l'intermédiaire d'un support creux (14, 15, 19) qui passe à travers le volant d'inertie (10) et entoure l'arbre d'entraînement (1), caractérisé en ce que le prolongement tubulaire (12) prévu pour le montage rotatif du volant d'inertie (10) entoure un manchon de portée (13) monté sur le volant d'inertie (10) sur le côté de ce dernier qui est dirigé vers le bâti (2), avec interposition d'un arbre creux (18), en ce qu'à l'intérieur de ce manchon de portée (13) est disposé un autre arbre creux (19) qui entoure l'arbre d'entraînement (1), dont l'extrémité éloignée du bâti (2) porte l'organe de réaction du frein à friction (5) et en ce que les deux arbres creux (18, 19) sont reliés entre eux à leur extrémité dirigée vers le bâti (2) et, là, portent une roue à vis sans fin (16) dans laquelle engrène une vis sans fin (17) montée rotative dans le prolongement tubulaire (12) et qui peut être entraînée ou immobilisée (Fig. 3).

FIG.1

FIG.2

FIG.3